# EUROPEAN PATENT APPLICATION

(11) **EP 2 088 717 A1**
(43) Date of publication of application: **12.08.2009**
(21) Application number: 07800960.2
(22) Date of filing: 15.08.2007
(51) Int. Cl.: H04L 12/56

(54) **A METHOD OF TRANSFERRING FRAGMENTATION MESSAGE, A SYSTEM OF COMMUNICATION AND A TUNNEL DEVICE**

(30) Priority: 04.12.2006 CN 200610162680
(71) Applicant: Huawei Technologies Co., Ltd., Longgang District, Shenzhen Guangdong 518129 (CN)
(72) Inventor: JU, Liedan, Shenzhen Guangdong 518129 (CN)
(74) Representative: Thun, Clemens
(86) International application number: PCT/CN2007/070484
(87) International publication number: WO 2008/067738

(57) **Abstract**

A method for transmitting fragmented packets, a communication system and tunnel equipment are disclosed herein to enable fragmented packets to traverse the NAT or firewall. The method includes: the first tunnel equipment receives an IP fragmented packet and converts it into a non-fragmented packet, and transmits the non-fragmented packet to the second tunnel equipment through a UDP tunnel. The system includes: a first tunnel equipment, a second tunnel equipment, and a UDP tunnel which connects the first tunnel equipment with the second tunnel equipment. The first funnel equipment is adapted to: receive an IP fragmented packet and convert it into a non-fragmented packet, and transmit the non-fragmented packet to the second tunnel equipment through a UDP tunnel. The second tunnel equipment is adapted to receive the packet from the first tunnel equipment. In addition, a tunnel equipment is disclosed herein. Through the present invention, fragmented packets can traverse the firewall.

## Description

This application claims a priority from the Chinese Patent Application No. 200610162680.2, filed with the Chinese Patent Office on December 04, 2006 and entitled "Method for Transmitting Fragmented Packets, Communication System, and Tunnel Equipment", the contents of which are incorporated herein by reference in their entirety.

### FIELD OF THE INVENTION

The present invention relates to the communication field, and in particular, to a method for transmitting fragmented packets, a communication system, and tunnel equipment.

### BACKGROUND

In order to cope with the lack of the IP address in the Internet Protocol version 4 (IPv4), enterprises generally deploy a Network Address Translator (NAT) or firewall at the egress of the Local Area Network (LAN) to translate the internal addresses and ensure network security.

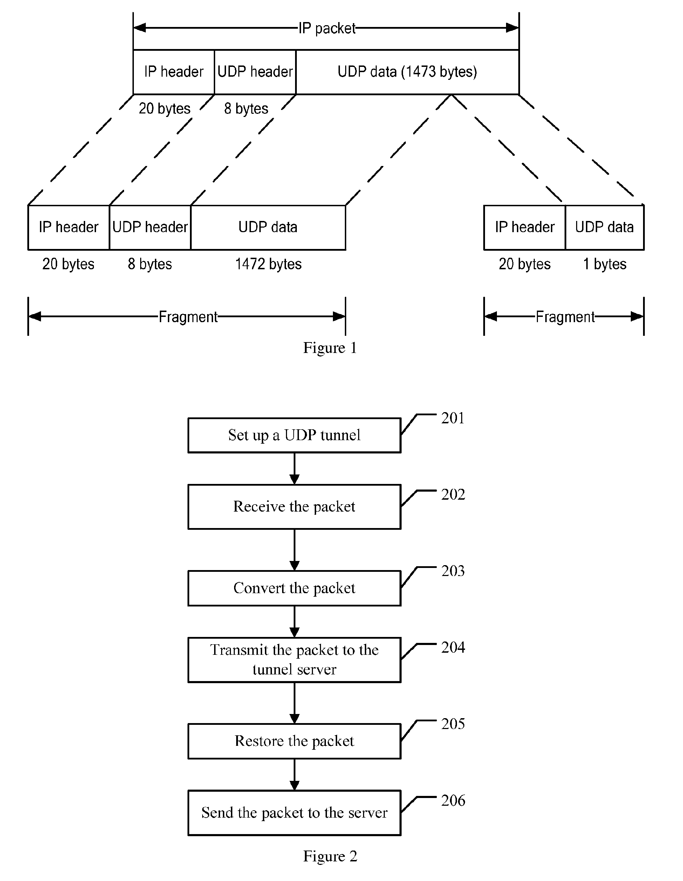

IP fragmenting is a technical means for transmitting IP packets on the network. When transmitting packets, the IP protocol divides a packet into several fragments for transmitting, and reassembles the fragments in the destination system. This process is called "fragmenting". After receiving an IP packet for transmitting, the IP layer needs to query the value of the Maximum Transmission Unit (MTU) of the interface first, and compare the MTU with the packet length. If the length of the IP packet is greater than the MTU, the IP packet needs to be fragmented. Figure 1 shows an example of fragmenting a User Datagram Protocol (UDP) packet. However, many NAT or firewall devices do not support the fragmented packet, which makes the applications that need fragmentation unable to traverse the NAT or firewall device.

### SUMMARY

A method for transmitting fragmented packets, a communication system and tunnel equipment are provided herein to enable fragmented packets to traverse the NAT or firewall.

A method for transmitting fragmented packets in an embodiment of the present invention includes: receiving, by a first tunnel equipment, an IP fragmented packet, and converting the IP fragmented packet into a non-fragmented packet; and transmitting the non-fragmented packet to the second tunnel equipment through a User Datagram Protocol (UDP) tunnel.

A communication system provided in an embodiment of the present invention includes: a first tunnel equipment, adapted to receive an IP fragmented packet and convert it into a non-fragmented packet, and transmit the non-fragmented packet to the second tunnel equipment through a UDP tunnel; a second tunnel equipment, adapted to receive the packet from the first tunnel equipment; and a UDP tunnel, adapted to connect the first tunnel equipment with the second tunnel equipment.

A tunnel equipment provided in an embodiment of the present invention includes: a receiving unit, adapted to receive a packet and send the received packet to an identifying unit; an identifying unit, adapted to judge whether the packet received by the receiving unit is a UDP tunnel packet: if the packet received by the receiving unit is a UDP tunnel packet, send the packet to a restoring unit; if the packet received by the receiving unit is a non-UDP tunnel packet, and send the packet to a converting unit; a converting unit, adapted to convert the non-UDP tunnel packet determined by the identifying unit; a restoring unit, adapted to restore the UDP tunnel packet determined by the identifying unit; and a transmitting unit, adapted to send the packet converted by the converting unit and the packet restored by the restoring unit.

In the embodiments of the present invention, a UDP tunnel header is added after the IP header of the packet, and the fragmented packet is converted into a non-fragmented packet and is transmitted through a preset UDP tunnel. After being transmitted to the peer side through a NAT or firewall, the packet is restored. Therefore, the fragmented packet is able to traverse the NAT or firewall.

### BRIEF DESCRIPTION OF THE DRAWINGS

Figure 1 shows fragmentation of an IP packet;

Figure 2 is a flowchart of a method in the first embodiment of the present invention;

Figure 3 is a flowchart of a method in the second embodiment of the present invention;

Figure 4 shows a communication system in an embodiment of the present invention; and

Figure 5 shows tunnel equipment in an embodiment of the present invention.

### DETAILED DESCRIPTION

A method for transmitting fragmented packets, a communication system and tunnel equipment are provided herein to enable fragmented packets to traverse the NAT or firewall.

As shown in Figure 2, the method for transmitting fragmented packets in the first embodiment of the present invention includes the following steps:

201. A UDP tunnel is set up.

A UDP Tunnel Client (UTC) sends a packet to set up a UDP tunnel with the UDP Tunnel Server (UTS).

The UTC sets up a UDP tunnel through a packet, as detailed below:
1. On the basis of the received packet, the UTC inserts a UDP tunnel header after the IP header. The protocol field in the UDP tunnel header is equal to the protocol field in the old IP header, and the offset field in the UDP tunnel header is equal to the offset field in the IP fragmented packet. The checksum is recalculated.
2. The UTC sends the packet to the NAT or firewall.
3. The NAT or firewall forwards the packet to the UTS.
4. After receiving the packet, the UTS judges whether the packet is a UDP tunnel packet first according to the destination address and destination port of the packet. If the packet is a UDP tunnel packet, the UTS judges whether the packet is a fragmented packet according to the offset field in the UDP tunnel header. If the packet is a fragmented packet, the UTS copies the protocol field in the UDP tunnel header to the protocol field of the IP header, and copies the offset field in the UDP tunnel header to the offset field of the IP header.
5. The IP packet is reassembled.
6. The source IP address in the packet is extracted, and combines with the source port in the UDP tunnel header to serve as an index for searching for a mapping entry. The mapping entry indicates the corresponding relation between the "source IP address + source port" and the new source IP address.
7. Because the packet is transmitted for the first time, no corresponding entry is searched out. Therefore, the UTS allocates a new source IP address, and records the source port of the UDP tunnel header, the destination port, the source IP address of the packet, and the new source IP address into an entry, namely, creates a new mapping entry. By now, the UDP tunnel has been set up.

The following process is performed after the UDP tunnel is set up.

202. The UTC receives the packet from the terminal.

203. The received packet is converted.

After the UTC receives the packet, a UDP tunnel header is inserted after the IP header on the basis of the old packet.

The UDP Tunnel Header (UTH) includes the following contents:
a standard UDP header;
a protocol field after the standard UDP header, for indicating whether the packet type carried in the old IP packet is UDP, TCP, or SCTP;
optionally, a type field after the standard UDP header, for indicating the packet type of the UDP tunnel; and
an offset field after the standard UDP header, for storing the offset of the IP fragmented packet.

In this embodiment, the protocol field in the UDP tunnel header is equal to the protocol field in the old IP header, and the offset field in the UDP tunnel header is equal to the offset field in the IP fragmented packet. The checksum is recalculated.

204. The converted packet is transmitted to the UTS.

The UTC sends the converted packet to the NAT or firewall, and the NAT or firewall forwards the packet to the UTS.

205. The UTS restores the received packet which is converted.

After receiving the converted packet, the UTS identifies that the packet is a UDP tunnel packet according to the destination IP address and destination port of the converted packet, and then performs the following steps:
1. Copying the protocol field in the UDP tunnel header to the protocol field of the IP header, and copying the offset field in the UDP tunnel header to the offset field of the IP header;
2. Deleting the UDP tunnel header, and recording the source port of the UDP tunnel header;
3. Reassembling the IP packet;
4. Extracting the source IP in the packet, and using it together with the source port in the UDP tunnel header as an index for searching for the entry;
5. Extracting the source IP from the entry; and
6. Substituting the new source IP address in the entry for the source IP address of the old packet, and recalculating the checksum.

206. The restored packet is sent to the server (namely, packet receiver).

Described above is the process of sending a fragmented packet from the UTC to the UTS. Now the process of sending a fragmented packet from the UTS to the UTC is described below.

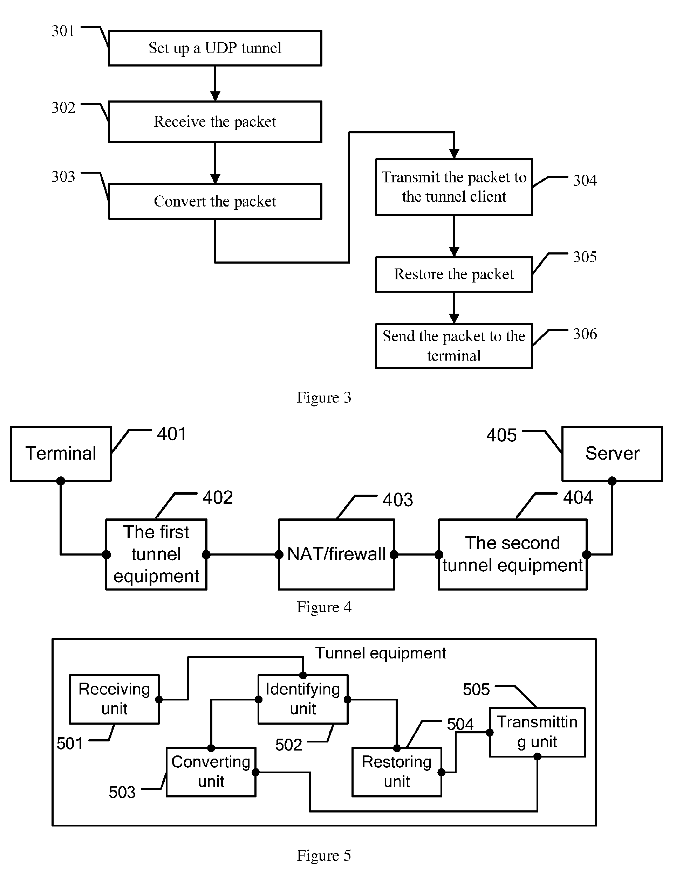

As shown in Figure 3, the method for transmitting fragmented packets in the second embodiment of the present invention includes the following steps:

301. A UDP tunnel is set up.

The UTC sends a packet to the UTS to set up a UDP tunnel. The tunnel setup process is the same as that in the first embodiment of the present invention.

302. The UTS receives the packet from the server.

303. The received packet is converted.

The detailed process of converting the packet received by the UTS is as follows:

The UTS searches for the mapping entry by using the destination IP of the packet as an index. If no mapping entry is found, the UTS discards the packet. If a mapping entry is found, the UTS extracts the recorded IP, source port, and destination port of the UDP tunnel header from the mapping entry, replaces the destination IP of the packet with the source IP in the entry, inserts a UDP tunnel header after the IP header of the packet, where the UDP tunnel header uses the source port of the UDP tunnel header recorded in the entry as a destination port, and uses the destination port of the UDP tunnel header as a source port. The protocol field is updated to the protocol field in the old IP, the protocol field in the new IP header is updated to 17 (namely, UDP), the offset field in the IP header is copied to the offset field in the UDP tunnel header, and the checksum is recalculated.

304. The converted packet is transmitted to the UTC.

The UTS sends the converted packet to the NAT or firewall, and the NAT or firewall forwards the packet to the UTC.

305. The UTC restores the received packet which is converted.

After receiving the converted packet, the UTC removes the UDP tunnel header after the IP header, copies the protocol field in the UDP tunnel header to the protocol field of the IP header, and copies the offset field in the UDP tunnel header to the offset field of the IP header.

306. The restored packet is sent to the terminal (namely, packet receiver).

As shown in Figure 4, a communication system in an embodiment of the present invention includes: a first tunnel equipment (UDP tunnel client) 402, and a second tunnel equipment (UDP tunnel server) 404;

A UDP tunnel is set up between the first tunnel equipment 402 and the second tunnel equipment 404.

The first tunnel equipment 402 is adapted to receive a fragmented packet and convert it into a non-fragmented packet, and transmit the non-fragmented packet to the second tunnel equipment 404 through a UDP tunnel;

The second tunnel equipment 404 is adapted to receive the packet from the first tunnel equipment.

In this embodiment, the first tunnel equipment 402 is a tunnel client, and the second tunnel equipment 404 is a tunnel server. The system further includes: a terminal 401, a NAT or firewall 403, and a server 405.

The terminal 401 is adapted to send packets to the first tunnel equipment 402 and receive packets from the first tunnel equipment 402.

The NAT or firewall 403 is adapted to perform address translation for the packet from the first tunnel equipment 402 or the second tunnel equipment 404 and forward the packet.

The server 405 is adapted to send packets to the second tunnel equipment 404 and receive packets from the second tunnel equipment 404.

As shown in Figure 5, the tunnel equipment in an embodiment of the present invention includes: a receiving unit 501, adapted to receive a packet and send the received packet to an identifying unit 502; an identifying unit 502, adapted to judge whether the packet is a UDP tunnel packet: if the packet received by the receiving unit is a UDP tunnel packet, send the packet to a restoring unit 504; otherwise, send the packet to a converting unit 503; a converting unit 503, adapted to convert the received fragmented packet into a non-fragmented packet and send it to a transmitting unit 505; a restoring unit 504, adapted to restore the received packet and send it to the transmitting unit 505; and a transmitting unit 505, adapted to send the packet.

In the foregoing embodiment, the tunnel equipment is separated from the terminal and server. It is understandable that the UDP tunnel client may be integrated into the terminal, and the UDP tunnel server may be integrated in the server, or on another device such as firewall and router.

Through the tunnel equipment in an embodiment of the present invention, the applications that need fragmentation can traverse the firewall or router. The traversed firewall device and router device may be any two network devices or terminal, for example, two terminals, two servers, a terminal and a server, or two routers.

Detailed above are a method for transmitting fragmented packets, a communication system and tunnel equipment in an embodiment of the present invention. Although the invention is described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for transmitting a fragmented packet, comprising:
receiving, by a first tunnel equipment, an Internet Protocol (IP) fragmented packet; converting the IP fragmented packet into a non-fragmented packet; and
transmitting the non-fragmented packet to a second tunnel equipment through a User Datagram Protocol (UDP) tunnel.

2. The method for transmitting the fragmented packet according to claim 1, wherein the converting the IP fragmented packet into the non-fragmented packet comprises:
adding a UDP tunnel header in the IP fragmented packet.

3. The method for transmitting the fragmented packet according to claim 1, wherein the transmitting the non-fragmented packet to the second tunnel equipment through the UDP tunnel comprises:
sending, by the first tunnel equipment, the non-fragmented packet to a Network Address Translator (NAT) or a firewall; and
forwarding, by the NAT or the firewall, the non-fragmented packet to the second tunnel equipment.

4. The method for transmitting the fragmented packet according to claim 2 or claim 3, further comprising:
restoring, by the second tunnel equipment, the received non-fragmented packet, and sending the restored IP fragmented packet to a packet receiver.

5. The method for transmitting the fragmented packet according to claim 4, wherein the second tunnel equipment is a tunnel server, and
wherein the restoring the received non-fragmented packet comprises:
copying information in the UDP tunnel header to a counterpart location of an IP header;
deleting the UDP tunnel header;
recording a source port of the UDP tunnel header;
reassembling the received non-fragmented packet;
obtaining a source IP address in the received non-fragmented packet;
searching for a mapping entry according to the source IP address and the source port in the UDP tunnel header;
if any mapping entry is found, substituting a new source IP address in the found entry for the source IP address; if no mapping entry is found, reallocating a new source IP address to replace the source IP address; and
calculating a checksum.

6. The method for transmitting the fragmented packet according to claim 4, wherein the second tunnel equipment is a tunnel client; and
wherein the restoring the received non-fragmented packet comprises:
copying information in the UDP tunnel header to a counterpart location of an IP header; and
deleting the UDP tunnel header; and
calculating a checksum.

7. A communication system, comprising: a first tunnel equipment, a second tunnel equipment, and a User Datagram Protocol (UDP) tunnel which connects the first tunnel equipment with the second tunnel equipment, wherein
the first tunnel equipment is adapted to convert an Internet Protocol (IP) fragmented packet into a non-fragmented packet, and transmit the non-fragmented packet to the second tunnel equipment through the UDP tunnel.

8. The communication system of claim 7, further comprising:
a terminal, adapted to send a first packet to the first tunnel equipment and receive a second packet from the first tunnel equipment, wherein the first packet sent to the first tunnel equipment comprises a fragmented packet; and
a Network Address Translator (NAT) or a firewall, respectively connected with the first tunnel equipment and the second tunnel equipment, and adapted to perform address translation for a third packet from the first tunnel equipment and/or the second tunnel equipment and forward the third packet; and
a server, adapted to send a fourth packet to the second tunnel equipment and receive a fifth packet from the second tunnel equipment.

9. The communication system of claim 8, wherein the first tunnel equipment is integrated on the terminal.

10. The communication system of claim 8, wherein the second tunnel equipment is integrated on the server.

11. The communication system according to any one of claims 7-10, wherein the first tunnel equipment is a tunnel client and the second tunnel equipment is a tunnel server.

12. A tunnel equipment, comprising:
a receiving unit, adapted to receive a packet and send the packet to an identifying unit;
the identifying unit, adapted to determine whether the packet is a User Datagram Protocol (UDP) tunnel packet: if the packet is a UDP tunnel packet, send the packet to a restoring unit; if the packet is a non-UDP tunnel packet, send the packet to a converting unit;
the converting unit, adapted to convert the non-UDP tunnel packet determined by the identifying unit;
the restoring unit, adapted to restore the UDP tunnel packet determined by the identifying unit; and
a transmitting unit, adapted to send the packet converted by the converting unit and the packet restored by the restoring unit.
